# EUROPÄISCHE PATENTSCHRIFT

(11) **EP 3 072 057 B1**
(45) Veröffentlichungstag und Bekanntmachung des Hinweises auf die Patenterteilung: **12.08.2020**
(21) Anmeldenummer: 14803048.9
(22) Anmeldetag: 20.11.2014
(51) Int. Cl.: G06F 13/42, H04L 5/20

(54) **VERFAHREN ZUR ÜBERTRAGUNG EINES USB-SIGNALS UND USB-ÜBERTRAGUNGSSYSTEM**
METHOD FOR TRANSMITTING A USB SIGNAL AND USB TRANSMISSION SYSTEM
PROCÉDÉ DE TRANSMISSION D'UN SIGNAL USB ET SYSTÈME DE TRANSMISSION USB

(30) Priorität: 21.11.2013 DE 102013019588
(43) Veröffentlichungstag der Anmeldung: 28.09.2016
(73) Patentinhaber: Rosenberger Hochfrequenztechnik GmbH & Co. KG, 83413 Fridolfing (DE)
(72) Erfinder: KUNZ, Stephan, 83308 Trostberg (DE); MÜLLER, Thomas, 83471 Berchtesgaden (DE); ARMBRECHT, Gunnar, 84453 Mühldorf (DE)
(74) Vertreter: Zeitler Volpert Kandlbinder Patent- und Rechtsanwälte Partnerschaft mbB
(86) Internationale Anmeldenummer: PCT/EP2014/003097
(87) Internationale Veröffentlichungsnummer: WO 2015/074754

(56) Entgegenhaltungen:
- EP-A1- 2 509 250
- DE-A1-102012 000 935
- US-A1- 2010 104 029
- "Phantomkreise erhoehen die DSL-Datenkapazitaet", NTZ (NACHRICHTENTECHNISCHE ZEITSCHRIFT), VDE VERLAG GMBH, DE, Bd. 61, Nr. 6, 1. Juni 2008 (2008-06-01), Seiten 9-12, XP001514752, ISSN: 0948-728X
- WIM FOUBERT ET AL: "Exploiting the Phantom-Mode Signal in DSL Applications", IEEE TRANSACTIONS ON INSTRUMENTATION AND MEASUREMENT, IEEE SERVICE CENTER, PISCATAWAY, NJ, US, Bd. 61, Nr. 4, 1. April 2012 (2012-04-01), Seiten 896-902, XP011429402, ISSN: 0018-9456, DOI: 10.1109/TIM.2011.2174100

## Beschreibung

Die Erfindung betrifft ein Verfahren zur Übertragung von drei Datensignalen eines USB-Signals, bei dem das erste Datensignal über ein erstes Leiterpaar differentiell übertragen wird und das zweite Datensignal über ein zweites Leiterpaar differentiell übertragen wird. Ferner betrifft die Erfindung ein System zur Übertragung von USB-Signalen und einen Adapter für ein solches System.

Herkömmliche USB2-Schnittstellen (bspw. USB 2.0 Schnittstellen) weisen ein Signal-Leiterpaar (D+ und D-) und ein Leiterpaar zur Stromversorgung (GND, VBUS) auf. Die Datenübertragung erfolgt symmetrisch und bidirektional über das Signal-Leiterpaar, wobei durch die eine Leitung des Signal-Leiterpaars das Datensignal ("Signalteil") und durch die andere Leitung das dazu jeweils invertierte Datensignal ("Referenzteil") übertragen wird. Ein Kabel zur Übertragung von USB2-Signalen weist zu diesem Zweck als Signalleiterpaar zwei verdrillte und abgeschirmte Leitungen auf, um Übertragungsstörungen möglichst zu vermeiden. Der Signalempfänger bildet die Differenzspannung des über das Signal- Leiterpaar differentiell (nämlich symmetrisch) übertragenen Datensignals, so dass auf beide Leitungen des Signal-Leiterpaars in gleichem Umfang einwirkende Störungen eliminiert werden.

Die Übertragung von USB-Signalen ist in verschiedensten technischen Anwendungen erforderlich. Bspw. kann in einem hinteren Teil eines Fahrzeugs eine USB-Buchse zum Einstecken von USB-Endgeräten gewünscht sein, so dass eine USB-Leitung von vorne nach hinten durch das Fahrzeug geführt werden muss. Auch können USB-Buchsen bzw. USB-Anschlüsse an verschiedenen Orten (Büros, öffentliche Einrichtungen, Transportmittel etc.) zum Anschließen von USB-Endgeräten erforderlich sein, wobei zu diesem Zweck USB-Leitungen zu verlegen sind. Wie oben erläutert, genügen zur

Übertragung eines herkömmlichen USB2-Signals (Datensignal und Versorgungsspannung) zwei Leiterpaare, so dass früher vieradrige Kabel zur Übertragung von USB-Signal verlegt wurden.

Vor einigen Jahren wurde der USB3-Standard eingeführt. USB3-Schnittstellen (bspw. USB3.0 Schnittstellen) weisen neben den oben erläuterten Anschlüssen (D+, D-, GND, VBUS) mindestens zwei zusätzliche Signal-Leiterpaare (SSTX+ und SSTX-; SSRX+ und SSRX-) auf. Über jedes dieser beiden Signal-Leiterpaare wird ein differentielles Datensignal übertragen bzw. in die USB-Schnittstelle eingeleitet. Insgesamt werden hierdurch höhere Datenraten erreicht als mit dem herkömmlichen USB2-Standard.

Folglich sind für USB3-Kompatibilität neue Stecker am Host und an den angeschlossenen Endgeräten und zusätzliche Datenübertragungsleitungen notwendig. Zu diesem Zweck wurde für die Übertragung von USB3-Signalen ein weiteres vieradriges Kabel verlegt, wobei dann die genannten acht USB3-Anschlüsse (D+, D-, GND, VBUS, SSTX+ und SSTX-; SSRX+ und SSRX-) über zwei vieradrige Kabel übertragen werden. Die insgesamt drei Datensignale werden dabei über jeweils ein Leiterpaar (D+ und D-; SSTX+ und SSTX-; SSRX+ und SSRX-) differentiell übertragen. Die Verlegung zusätzlicher Kabel ist allerdings mit einem hohen Aufwand verbunden.

Alternativ kann natürlich anstelle der beiden vieradrigen Kabel ein einziges Standard-USB3-Kabel verlegt werden. Diese Verlegung ist jedoch mit einem noch höheren Aufwand verbunden, da die alten USB2-Kabel entfernt werden müssen und die neuen USB3-Kabel teuer sind.

Die Veröffentlichungen "Phantomkreise erhöhen die DSL-Datenkapazität", NTZ (Nachrichtentechnische Zeitschrift), VDE Verlag GmbH, Bd. 61, Nr. 6, 1. Juni 2008; Wim Foubert et al., "Exploiting the Phantom-Mode Signal in DSL Applications", IEEE transactions on instrumentation and measurement, Bd. 61, Nr. 4, 1. April 2012, Seiten 896-902; sowie die Druckschrift EP 2 509 250 A1 beschreiben jeweils Verfahren zur Übertragung von Datensignalen mittels eines Phantomkreises.
In Anbetracht der beschriebenen Probleme ist es die Aufgabe der vorliegenden Erfindung, ein Verfahren zur Übertragung von USB-Signalen mit mindestens drei Datensignalen bereitzustellen, das weniger Aufwand und Umstellung erfordert als die herkömmlichen Verfahren.

Diese Aufgabe wird im Wesentlichen dadurch gelöst, dass ein Signalteil des dritten Datensignals als Gleichtaktanteil über das erste Leiterpaar übertragen wird und ein Referenzteil des dritten Datensignals als Gleichtaktanteil über das zweite Leiterpaar übertragen wird.

Mit anderen Worten werden die drei differentiell zu übertragenden Datensignale nicht über die eigentlich erforderlichen drei, sondern über nur zwei Leiterpaare übertragen. Kabel mit zwei Adernpaaren sind bereits in zahlreichen technischen Anwendungen wie etwa in Fahrzeugen, Büros etc. verlegt, so dass keine weiteren Kabel für die gewünschte Übertragung der drei USB3-Datensignale verlegt werden müssen.

Das zusätzlich erforderliche Versorgungssignal zur Spannungsversorgung des USB-Endgeräts kann zumeist auf anderem Wege einfacher zugeführt werden, ohne dass zusätzliche Leitungen verlegt werden müssen. So ist bspw. in Automobilen ohnehin an verschiedensten Stellen eine Versorgungs-Gleichspannung vorhanden, auf die ohne weiteres zurückgegriffen werden kann. Für das Leiterpaar zur Übertragung der Versorgungsspannung ist ferner anders als bei Leiterpaaren zur Übertragung von Datensignalen nicht auf eine vollständige Abschirmung, auf die symmetrisch und gleichmäßig verlaufende Verdrillung etc. zu achten, so dass notfalls zusätzlich eine Leitung zur Zuführung der Versorgungs-Spannung verlegt werden kann.

Die Erfindung geht auf die aus dem Bereich der analogen Telefonie stammende Erkenntnis zurück, dass unter bestimmten Voraussetzungen drei differentielle Datensignale über nur zwei Leiterpaare übertragbar sind, nämlich wenn das dritte Datensignal über einen so genannten Phantomkreis übertragen wird. Dafür wird der Signalteil des dritten Datensignals, der dem invertierten Referenzteil des dritten Datensignals entspricht, oder ein Vielfaches oder ein Bruchteil davon (vorzugsweise der halbe Signalteil D+/2) als Gleichtaktanteil über das erste Signalleiterpaar übertragen und der Referenzteil des dritten Datensignals, der dem invertierten Signalteil entspricht, oder ein Vielfaches oder ein Bruchteil (vorzugsweise der halbe Referenzteil D-/2) davon wird als Gleichtaktanteil über das zweite Signalleiterpaar übertragen.

Mit anderen Worten kann vor der Übertragung der Signalteil des dritten Datensignals als Gleichtaktanteil auf das differentiell zu übertragende erste Datensignal addiert werden, und der Referenzteil des dritten Datensignals kann als Gleichtaktanteil auf das differentiell zu übertragende zweite Datensignal addiert werden.

Nach der Übertragung kann das dritte Datensignal aus dem Gleichtaktanteil des über das erste Leiterpaar übertragen en Signals und dem Gleicht aktanteil des über das zweite Leiterpaar übertragenen Signals als differentielles Datensignal zusammengesetzt werden. Das erste Datensignal und das zweite Datensignal werden durch die Übertragung des dritten Datensignals über dieselben Leitungen nicht beeinträchtigt, da die Signalanteile und Referenzanteile der ersten und zweiten Datensignale jeweils um denselben Betrag (im Gleichtakt) verschoben werden, so dass die Differenz, die den eigentlichen Datenstrom wiedergibt, unverändert bleibt. Dieses Prinzip ist dem Grundsatz nach aus dem Bereich der analogen Telefonie bekannt, und es wird in dieser Hinsicht auf die einschlägige Fachliteratur verwiesen.

Dabei hat es sich im Hinblick auf geringe Störungsanfälligkeit als vorteilhaft erwiesen, dass das erste Datensignal, das zweite Datensignal und/oder das dritte Datensignal vor dem Schritt der Addition des Gleichtaktanteils in symmetrischer Form zugeführt werden. Mit anderen Worten entsprechen die Signalteile der differentiell zugeführten USB-Signale jeweils den invertierten Referenzteilen. Insbesondere entspricht der über das erste Signalleiterpaar im Gleichtakt übertragene Signalteil des dritten Datensignals im Betrag dem über das zweite Signalleiterpaar im Gleichtakt übertragenen Referenzteil des dritten Datensignals, wobei aber Signalteil und Referenzteil umgekehrte Vorzeichen haben.

Um die Datensignale vor äußeren Störungseinflüssen durch elektromagnetische Störfelder zu schützen, können die zwei Leiterpaare durch eine gemeinsame Schirmung geschirmt werden.

Eine besonders störungsarme Übertragung ist möglich, wenn die zwei Leiterpaare in einer Sternvierer-Anordnung geführt werden, bevorzugt in Form eines HSD-Übertragungssystems. Das HSD-Übertragungssystem trägt zwei symmetrische Leitungspaare in einem Kabel. Beide Paare sind von einem gemeinsamen Schirm umgeben. Die einzeln isolierten Leiter sind dabei in Form eines Sternvierers angeordnet und können gemeinsam verseilt sein. Zwei einander im Sternvierer gegenüberliegende Leiter bilden ein gemeinsames differentielles Aderpaar.

Damit liegt ein symmetrisches Paar immer in der virtuellen Masseebene des jeweils zweiten Paars. Dies ermöglicht die Realisierung einer hohen Übersprechdämpfung bei gleichzeitig größtmöglicher Kompaktheit des Kabels.

Das erfindungsgemäße Verfahren eignet sich besonders zur Übertragung eines USB3-Signals, bspw. eines USB3.0-Signals, wobei über das erste Leiterpaar die USB3-Daten vom Host zum Gerät (SSTX+ und SSTX-) und über das zweite Leiterpaar die USB3-Daten vom Gerät zum Host (SSRX+ und SSRX-) übertragen werden, während das D+/D- Signal über den Phantomkreis übertragen wird.

Gemäß einem weiteren Gesichtspunkt betrifft die Erfindung ein USB-Signalübertragungssystem mit zwei Adaptern, die über zwei Paare von Überträger-Signalleitern miteinander verbunden sind, wobei jeder der Adapter eine USB-Schnittstelle zum Einleiten/Ausleiten eines USB-Signals aufweist.

Erfindungsgemäß weisen die USB-Schnittstellen jeweils mindestens drei Paare von USB-Signalleitern auf, die jeweils zur differentiellen Übertragung eines USB-Datensignals eingerichtet sind. Die drei Paare von USB-Signalleitern sind über eine Phantomschaltung mit den zwei Paaren von Überträger-Signalleitern gekoppelt.

Mit anderen Worten weisen die Adapter jeweils Mittel zum Hinzufügen eines ersten Gleichtaktanteils zu dem über das erste USB-Signalleiterpaar zugeführten differentiellen Signal zum Erzeugen eines ersten differentiellen Übertragungssignals zur Übertragung über das erste Überträger-Signalleiterpaar und Mittel zum Hinzufügen eines zweiten Gleichtaktanteils zu dem über das zweite USB-Signalleiterpaar zugeführten differentiellen Signal zum Erzeugen eines zweiten differentiellen Übertragungssignals zur Übertragung über das zweite Überträger-Signalleiterpaar auf, wobei der erste Gleichtaktanteil einem Signalteil des über das dritte USB-Signalleiterpaar zugeführten differentiellen Signals oder einem Vielfachen oder Bruchteil davon entspricht und der zweite Gleichtaktanteil einem Referenzteil des über das dritte USB-Signalleiterpaar zugeführten differentiellen Signals oder dem Vielfachen oder dem Bruchteil davon entspricht.

Das erfindungsgemäße USB-Signalübertragungssystem hat damit jeweils drei Leiterpaare als Eingang und Ausgang, von denen jedes Leiterpaar zur Übertragung eines differentiellen USB-Datensignals eingerichtet ist, während die Übertragung selbst über nur zwei Leiterpaare erfolgt. Das dritte USB-Datensignal wird über das über die Phantomschaltung bereitgestellte virtuelle dritte Leiterpaar übertragen.

Vorzugsweise ist das erste USB-Signalleiterpaar ein SSTX-Signalleiterpaar (SSTX+ und SSTX-), das zweite USB-Signalleiterpaar ein SSRX-Signalleiterpaar (SSRX+ und SSRX-) und das dritte USB-Signalleiterpaar ein D-Signalleiterpaar (D+ und D-). Damit wird das über das D-Signalleiterpaar übertragene Datensignal als virtuelles Signal übertragen.

Für eine störungsarme Übertragung hat es sich als vorteilhaft erwiesen, dass die zwei Paare von Überträger-Signalleitern in einer Stern-Viererform angeordnet und vorzugsweise durch eine HSD-Verbindung ausgeführt sind. Dazu können die beiden Adapter vorteilhafterweise durch ein Sternviererkabel verbunden sein. An den über die Überträger-Signalleiter miteinander verbundenen Adapterausgängen können alternativ oder zusätzlich HSD-Steckverbinder in Form von HSD-Buchsen o.dgl. angeordnet sein, die über ein Sternviererkabel oder ein anderes Kabel mit zumindest zwei Leiterpaaren miteinander verbunden sind.

Zwischen den beiden Adaptern kann zusätzlich ein Versorgungsleiterpaar verlaufen, das ggf. mit Versorgungsleiterpaaren der USB-Schnittstellen verbunden ist.

Zweckmäßigerweise ist an zumindest einer der USB-Schnittstellen eine USB3-Anschlussbuchse und/oder ein USB3-Verbindungskabel angeschlossen.

Die Störungsanfälligkeit der zu übertragenden USB-Datensignale kann durch eine ausgehend von der ersten USB-Schnittstelle bis zur der zweiten USB-Schnittstelle über beide Adapter und die Überträger-Signalleiter verlaufende elektromagnetische Schirmung zur elektromagnetischen Abschirmung der Datensignale verringert werden.

Bei herkömmlichen Phantomschaltungen sind oftmals Spulen vorhanden, bei denen der Gleichtaktanteil durch Einspeisung der Phantomströme (Signalteil und Referenzteil des dritten differentiellen Datensignals) in die Sekundärmitten zu den differentiellen ersten und zweiten Datensignalen dazuaddiert wird. Dadurch heben sich die magnetischen Wirkungen auf und die Phantomströme induzieren auf den Primärseiten der Spulen keine Spannung.

Alternativ können die Phantomkreise durch digitale Schaltelemente in den Adaptern verwirklicht werden, bspw. durch eine in jedem der Adapter angeordnete Platine mit logischen Schaltelementen wie etwa digitalen Addieren und/oder Subtrahierern.

Gemäß einem besonders wichtigen Gesichtspunkt der Erfindung wird ein Adapter für ein USB-Signalübertragungssystem bereitgestellt, der eine erste Schnittstelle zur Einleitung/Ausleitung eines USB-Signals und eine zweite Schnittstelle, insbesondere eine HSD-Schnittstelle, aufweist. Die erste Schnittstelle ist in Form einer USB-Schnittstelle mit drei USB-Signalleiterpaaren ausgeführt, von denen jedes Paar zur differentiellen Übertragung eines USB-Datensignals eingerichtet ist, und die zweite Schnittstelle weist zwei Überträger-Signalleiterpaaren auf, von denen jedes Paar zur differentiellen Übertragung eines Datensignals eingerichtet ist. Der Adapter weist erfindungsgemäß Mittel zum Hinzufügen eines ersten Gleichtaktanteils zu dem über das erste USB-Signalleiterpaar zuzuführenden differentiellen Signal zum Erzeugen eines ersten differentiellen Übertragungssignals zur Übertragung über das erste Überträger-Signalleiterpaar und Mittel zum Hinzufügen eines zweiten Gleichtaktanteils zu dem über das zweite USB-Signalleiterpaar zuzuführenden differentiellen Signal zum Erzeugen eines zweiten differentiellen Übertragungssignals zur Übertragung über das zweite Überträger-Signalleiterpaar auf, wobei der erste Gleichtaktanteil einem Signalteil des über das dritte USB-Signalleiterpaar zuzuführenden differentiellen Signals oder einem Vielfachen oder einem Bruchteil davon entspricht und der zweite Gleichtaktanteil einem Referenzteil des über das dritte USB-Signalleiterpaar zuzuführenden differentiellen Signals oder einem Vielfachen oder Bruchteil davon entspricht.

In einer besonders bevorzugten Ausführungsform ist die zweite Schnittstelle eine HSD-Schnittstelle. An der USB-Schnittstelle kann eine USB3-Buchse (bspw. eine USB 3.0-Buchse) und/oder ein USB3-Kabel (bspw. ein USB 3.0-Kabel) angeschlossen sein. An der zweiten Schnittstelle können eine HS D-Buchse, ein HSD-Stecker und/oder ein HSD-Kabel angeschlossen sein. In der folgenden Beschreibung wird die Erfindung unter Bezugnahme auf die beigefügte Zeichnung erläutert. In der Zeichnung zeigt:

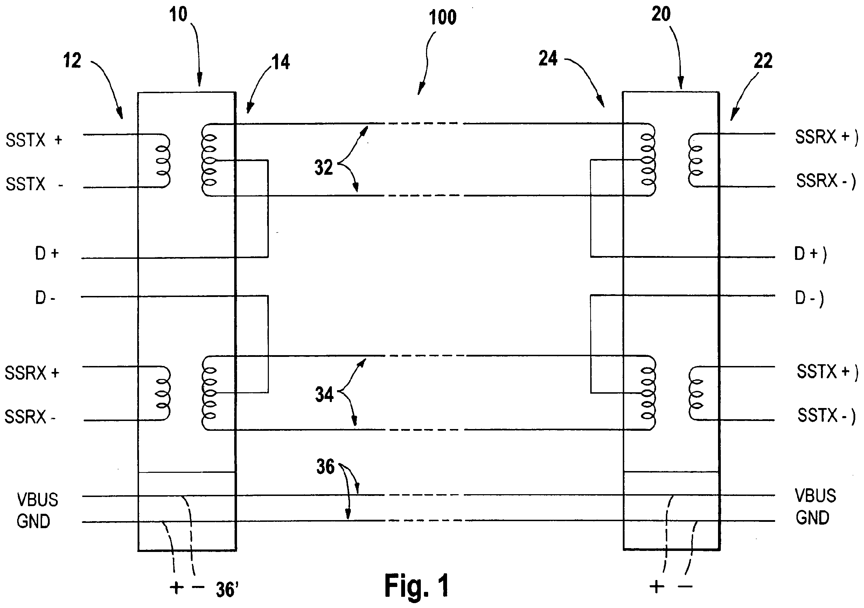

Fig. 1 einen schematischen Schaltungsplan eines erfindungsgemäßen USB-Übertragungssystems, das zur Ausführung des erfindungsgemäßen Verfahrens geeignet ist.

Das USB-Übertragungssystem 100 weist insgesamt zwei erfindungsgemäße Adapter 10 und 20 auf. Jeder Adapter 10, 20 weist auf der einen Seite eine herkömmliche USB3-Schnittstelle 12, 22 (bspw. eine USB 3.0 Schnittstelle) und auf der anderen Seite eine zweite Schnittstelle 14, 24 auf, die zwei Signalleiterpaare 32, 34 zum differentiellen Übertragen von Datensignalen aufweist.

Die zweite Schnittstelle kann jeweils bspw. eine HSD-Schnittstelle sein.

Die zweiten Schnittstellen 14, 24 der beiden Adapter 10, 20 können mit einem Kabel verbunden sein, in dem zwei jeweils verdrillte Leiterpaare bspw. nach Art einer Sternviereranordnung verlaufen. Die beiden Leiterpaare können jeweils geschirmt sind. Vorzugsweise weist das die beiden Leiterpaare 32, 34 aufweisende Kabel einen Außenleiter als gemeinsamen Schirm auf.

Die beiden Adapter 10, 20 können durch ein weiteres Leiterpaar 36 verbunden sein, in dem eine Versorgungsspannung (bspw. 5V Gleichspannung) geführt wird. Dieses weitere Leiterpaar 36 ist aber nicht erfindungswesentlich, und eine Versorgungsspannung 36' kann einer oder beiden USB-Schnittstellen 12, 24 auch extern zugeführt werden, bspw. durch die in einem Automobil ohnehin vorhandene Spannungsversorgung.

Jede der beiden USB-Schnittstellen weist die üblichen USB3-Anschlüsse SSTX+, SSTX-; SSRX+, SSRX-; D+, D- auf. Dem Anschlusspaar SSTX+, SSTX- kann ein erstes differentielles Datensignal zugeführt werden, dessen Signalteil im Folgenden als SSTX+ und dessen Referenzteil im Folgenden als SSTX- bezeichnet wird. USB-Signale werden normalerweise symmetrisch übertragen. Die Differenz SSTX+ - SSTX- stellt den eigentlichen Datenstrom dar. Wenn sich die Absolutwerte der Spannungen der Signale SSTX+ und SSTX- um denselben Betrag aufgrund von Störungen verschieben, bleibt die Differenz zwischen den Werten unverändert.

Dem Anschlusspaar SSRX+, SSRX- kann ein zweites differentielles Datensignal zugeführt werden, dessen Signalteil im Folgenden als SSRX+ und dessen Referenzteil im Folgenden als SSRX- bezeichnet wird.

Dem Anschlusspaar D+, D- kann ein drittes differentielles Datensignal zugeführt werden, dessen Signalteil im Folgenden als D+ und dessen Referenzteil im Folgenden als D- bezeichnet wird.

Der Signalteil D+ des dritten differentiellen Signals wird als Gleichtaktanteil über das Überträger-Signalpaar 32 übertragen. Damit werden über das erste Signalpaar 32 die Signale (SSTX+)+(D+/2) und (SSTX-)+(D+/2) übertragen. Die Differenz dieser Signale ergibt (SSTX+)-(SSTX-) und damit den Datenstrom des ersten Datensignals. Die Summe dieser Signale ergibt (SSTX+)+(SSTX-)+(D+)=(D+), da (SSTX+)=-(SSTX-).

Der Referenzteil D- des dritten differentiellen Signals wird als Gleichtaktanteil über das Überträger-Signalpaar 34 übertragen. Damit werden über das zweite Signalpaar 34 die Signale (SSRX+)+(D-/2) und (SSRX-)+(D-/2) übertragen. Die Differenz dieser Signale ergibt (SSRX+)-(SSRX-) und damit den Datenstrom des zweiten Datensignals. Die Summe dieser Signale ergibt (SSRX+)+(SSRX-)+(D-)=(D-), da (SSRX+)=-(SSRX-).

Mögliche als Gleichtaktsignal auf beide Überträger-Signalpaare 32, 34 wirkende Störungen werden bei der Differenzbildung (D+)-(D-) eliminiert.

Somit ist es erfindungsgemäß möglich, drei USB-Datensignale differentiell über nur zwei Leiterpaare zu übertragen. Durch die Verwendung der erfindungsgemäßen Adapter an den beiden Enden der bereits in zahlreichen technischen Anwendungen verlegten Kabel mit zwei Leiterpaaren können somit USB3 -Signale übertragen werden, ohne dass die Verlegung zusätzlicher Kabel erforderlich ist.

Der erfindungsgemäße Adapter zur Verwendung in dem erfindungsgemäßen USB-Übertragungssystem kann in Form einer Platine mit digitalen Schaltelementen wie Addierern und/oder Subtrahierern verwirklich sein, wobei an der USB-Schnittstelle des Adapters eine USB3 Buchse angekoppelt sein kann und an der zweiten Schnittstelle des Adapters ein HSD-Steckverbinder und/oder ein Sternviererkabel angekoppelt sein kann.

## Patentansprüche

1. Verfahren zur Übertragung von drei Datensignalen eines USB-Signals, bei dem das erste Datensignal über ein erstes Leiterpaar (32) differentiell übertragen wird und das zweite Datensignal über ein zweites Leiterpaar (34) differentiell übertragen wird, **dadurch gekennzeichnet, dass** ein Signalteil (D+) des dritten Datensignals als Gleichtaktanteil über das erste Leiterpaar (32) übertragen wird und ein Referenzteil (D-) des dritten Datensignals als Gleichtaktanteil über das zweite Leiterpaar (34) übertragen wird.

2. Verfahren nach Anspruch 1, **dadurch gekennzeichnet, dass** nach der Übertragung das dritte Datensignal aus dem Gleichtaktanteil des über das erste Leiterpaar (32) übertragenen Signals und dem Gleichtaktanteil des über das zweite Leiterpaar (34) übertragenen Signals als differentielles Datensignal (D+', D-') zusammengesetzt wird.

3. Verfahren nach Anspruch 1 oder 2, **dadurch gekennzeichnet, dass** vor der Übertragung der Signalteil des dritten Datensignals als Gleichtaktanteil auf das differentiell zu übertragende erste Datensignal gegeben wird, und der Referenzteil des dritten Datensignals als Gleichtaktanteil auf das differentiell zu übertragende zweite Datensignal gegeben wird.

4. Verfahren nach Anspruch 3, **dadurch gekennzeichnet, dass** der im Gleichtakt übertragene Signalteil des dritten Datensignals im Betrag dem im Gleichtakt übertragenen Referenzteil des dritten Datensignals entspricht, aber im Vorzeichen umgekehrt ist.

5. Verfahren nach einem der vorhergehenden Ansprüche, **dadurch gekennzeichnet, dass** die zwei Leiterpaare (32, 34) durch eine gemeinsame Schirmung geschirmt werden.

6. Verfahren nach Anspruch 5, **dadurch gekennzeichnet, dass** die zwei Leiterpaare (32, 34) in einer Sternvierer-Anordnung geführt werden, bevorzugt in einem HSD-Übertragungssystem.

7. Verfahren nach einem der vorhergehenden Ansprüche, **dadurch gekennzeichnet, dass** ein USB3-Signal übertragen wird, wobei über das erste Leiterpaar (32) die USB3-Daten vom Host zum Gerät (SSTX+ und SSTX-) und über das zweite Leiterpaar (34) die USB3-Daten vom Gerät zum Host (SSRX+ und SSRX-) differentiell übertragen werden, während das D+/D- Signal über einen Phantomkreis übertragen wird.

8. Adapter (10), mit einer ersten Schnittstelle in Form einer USB-Schnittstelle (12) mit drei USB-Signalleiterpaaren (SSTX+, SSTX-; SSRX+, SSRX-; D+, D-), von denen jedes Paar zur differentiellen Übertragung eines USB-Datensignals eingerichtet ist, und mit einer zweiten Schnittstelle (14) mit zwei Überträger-Signalleiterpaaren (32, 34), von denen jedes Paar zur differentiellen Übertragung eines Datensignals eingerichtet ist, **gekennzeichnet durch** Mittel zum Hinzufügen eines ersten Gleichtaktanteils zu dem über das erste USB-Signalleiterpaar (SSTX+, SSTX-) differentiell zuzuführenden USB-Datensignal zum Erzeugen eines ersten differentiellen Übertragungssignals zur Übertragung über das erste Überträger-Signalleiterpaar (32) und Mittel zum Hinzufügen eines zweiten Gleichtaktanteils zu dem über das zweite USB-Signalleiterpaar (SSRX+, SSRX-) differentiell zuzuführenden USB-Datensignal zum Erzeugen eines zweiten differentiellen Übertragungssignals zur Übertragung über das zweite Überträger-Signalleiterpaar (34), wobei der erste Gleichtaktanteil einem Signalteil (D+) des über das dritte USB-Signalleiterpaar (D+, D-) differentiell zuzuführenden USB-Datensignals oder einem Vielfachen oder Bruchteil davon entspricht und der zweite Gleichtaktanteil einem Referenzteil (D-) des über das dritte USB-Signalleiterpaar (D+, D-) differentiell zuzuführenden Signals oder einem Vielfachen oder Bruchteil davon entspricht.

9. Adapter nach Anspruch 8 **dadurch gekennzeichnet, dass** die zweite Schnittstelle (14) eine HSD-Schnittstelle ist.

10. Adapter nach Anspruch 8 oder 9 **gekennzeichnet durch** eine an der USB-Schnittstelle (12) angeschlossene USB3-Buchse und/oder ein USB3-Kabel und eine an der zweiten Schnittstelle (14) angeschlossene HSD-Buchse oder ein HSD-Kabel.

11. USB-Signalübertragungssystem (100) mit zwei Adaptern (10, 20) gemäß Anspruch 8, die über die zwei Paare (32, 34) von Überträger-Signalleitern miteinander verbunden

12. USB-Signalübertragungssystem nach Anspruch **dadurch gekennzeichnet, dass** das erste USB-Signalleiterpaar ein SSTX-Signalleiterpaar (SSTX+, SSTX-), das zweite USB-Signalleiterpaar ein SSRX-Signalleiterpaar (SSRX+, SSRX-) und das dritte USB-Signalleiterpaar ein D-Signalleiterpaar (D+, D-) ist.

13. USB-Signalübertragungssystem nach Anspruch 11 oder 12, **dadurch gekennzeichnet, dass** die zwei Paare (32, 34) von Überträger-Signalleitern in einem Kabel in einer Stern-Viererform angeordnet sind und vorzugsweise in Form einer HSD-Verbindung ausgeführt sind.

14. USB-Signalübertragungssystem nach einem der Ansprüche 11 bis 13, **dadurch gekennzeichnet, dass** zwischen den beiden Adaptern (10, 20) zusätzlich ein Versorgungsleiterpaar (36) verläuft, das mit Versorgungsleiterpaaren (VBUS, GND) der USB-Schnittstellen (10, 20) verbunden ist.

15. USB-Signalübertragungssystem nach einem der Ansprüche 11 bis 14, **gekennzeichnet durch** eine an zumindest einer der USB-Schnittstellen (12, 22) angeschlossene USB3-Anschlussbuchse und/oder ein USB3-Verbindungskabel.

16. USB-Signalübertragungssystem nach einem der Ansprüche 11 bis 15, **gekennzeichnet durch** eine ausgehend von der ersten USB-Schnittstelle (12) bis zur der zweiten USB-Schnittstelle (22) über beide Adapter (10, 20) und die Überträger-Signalleiterpaare (32, 34) verlaufende Schirmung zur elektromagnetischen Abschirmung der Datensignale.

17. USB-Signalübertragungssystem nach einem der Ansprüche 11 bis 16, **gekennzeichnet durch** eine in jedem der Adapter (10, 20) angeordnete Platine mit logischen Schaltelementen wie etwa digitalen Addieren und/oder Subtrahierern.

## Claims

1. Method for transmitting three data signals from a USB signal in which the first data signal is transmitted differentially via a first conductor pair (32) and the second data signal is transmitted differentially via a second conductor pair (34), **characterised in that** a signal portion (D+) of the third data signal is transmitted as a common mode component via the first conductor pair (32) and a reference portion (D-) of the third data signal is transmitted as a common mode component via the second conductor pair (34).

2. Method according to claim 1, **characterised in that,** following transmission, the third data signal can be assembled from the common mode component of the signal transmitted via the first conductor pair (32) and the common mode component of the signal transmitted via the second conductor pair (34) as the differential data signal (D+', D-').

3. Method according to claim 1 or 2, **characterised in that,** before transmission, the signal portion of the third data signal is added, as a common mode component, to the first data signal which is to be transmitted differentially, and the reference portion of the third data signal is added, as a common mode component, to the second data signal which is to be transmitted differentially.

4. Method according to claim 3, **characterised in that** the signal portion of the third data signal transmitted in common mode corresponds in amount to the reference portion of the third data signal transmitted in common mode, but with the opposite sign.

5. Method according to one of the preceding claims, **characterised in that** the two conductor pairs (32, 34) are shielded by means of a common shielding.

6. Method according to claim 5, **characterised in that** the two conductor pairs (32, 34) are laid in a star quad arrangement, preferably in the form of an HSD transmission system.

7. Method according to one of the preceding claims, **characterised in that** a USB3 signal is transmitted, wherein the USB3 data are transmitted differentially from the host to the device (SSTX+ and SSTX-) via the first conductor pair (32) and the USB3 data are transmitted differentially from the device to the host (SSRX+ and SSRX-) via the second conductor pair (34), while the D+/D- signal is transmitted via a phantom circuit.

8. Adapter (10) with a first interface in the form of a USB interface (12) with three USB signal conductor pairs (SSTX+, SSTX-; SSRX+, SSRX-; D+, D-), each pair being configured for the differential transmission of a USB data signal, and with a second interface (14) with two transmitter signal conductor pairs (32, 34), each pair being configured for the differential transmission of a data signal, **characterised by** means for adding a first common mode component to the differential USB data signal which is to be fed via the first USB signal conductor pair (SSTX+, SSTX-) in order to generate a first differential transmission signal for transmission via the first transmitter signal conductor pair (32) and means for adding a second common mode component to the differential USB data signal which is to be fed via the second USB signal conductor pair (SSRX+, SSRX-) in order to generate a second differential transmission signal for transmission via the second transmitter signal conductor pair (34), wherein the first common mode component corresponds to a signal portion (D+) of the differential USB data signal which is to be fed via the third USB signal conductor pair (D+, D-) or a multiple or a fraction thereof and the second common mode component corresponds to a reference portion (D-) of the differential signal which is to be fed via the third USB signal conductor pair (D+, D-) or a multiple or fraction thereof.

9. Adapter according to claim 8, **characterised in that** the second interface (14) is an HSD interface.

10. Adapter according to claim 8 or 9, **characterised by** a USB3 socket and/or a USB3 cable connected to the USB interface (12) and an HSD socket or an HSD cable connected to the second interface (14).

11. USB signal transmission system (100) with two adapters (10, 20) according to claim 8, which are connected together via the two pairs (32, 34) of transmitter signal conductors.

12. USB signal transmission system according to claim 11, **characterised in that** the first USB signal conductor pair is an SSTX signal conductor pair (SSTX+, SSTX-), the second USB signal conductor pair is an SSRX signal conductor pair (SSRX+, SSRX-) and the third USB signal conductor pair is a D signal conductor pair (D+, D-).

13. USB signal transmission system according to claim 11 or 12, **characterised in that** the two pairs (32, 34) of transmitter signal conductors are arranged in a cable in a star quad form and preferably designed in the form of an HSD connection.

14. USB signal transmission system according to one of the claims 11 to 13, **characterised in that,** additionally, a supply conductor pair (36) runs between the two adapters (10, 20) which is connected with supply conductor pairs (VBUS, GND) of the USB interfaces (10, 20).

15. USB signal transmission system according to one of the claims 11 to 14, **characterised by** a USB3 connection socket and/or a USB3 connection cable connected to at least one of the USB interfaces (12, 22).

16. USB signal transmission system according to one of the claims 11 to 15, **characterised by** a shielding starting out from the first USB interface (12) and running via both adapters (10, 20) and the transmitter signal conductor pairs (32, 34) up to the second USB interface (22) for electromagnetic shielding of the data signals.

17. USB signal transmission system according to one of the claims 11 to 16, **characterised by** a circuit board arranged in each of the adapters (10, 20) containing logical switching elements such as digital addition and/or subtraction.

## Revendications

1. Procédé de transmission de trois signaux de données d'un signal USB, selon lequel le premier signal de données est transmis de manière différentielle par une première paire de conducteurs (32) et le deuxième signal de données est transmis de manière différentielle par une deuxième paire de conducteurs (34), **caractérisé en ce qu'**une partie de signal (D+) du troisième signal de données est transmise sous la forme d'une composante de mode commun par la première paire de conducteurs (32) et une partie de référence (D-) du troisième signal de données est transmise sous la forme d'une composante de mode commun par la deuxième paire de conducteurs (34).

2. Procédé selon la revendication 1, **caractérisé en ce que**, après la transmission, le troisième signal de données est composé de la composante de mode commun du signal transmis par la première paire de conducteurs (32) et de la composante de mode commun du signal transmis par la deuxième paire de conducteurs (34) sous la forme d'un signal de données différentiel (D+', D-').

3. Procédé selon la revendication 1 ou 2, **caractérisé en ce que**, avant la transmission, la partie de signal du troisième signal de données est appliquée sous forme de composante de mode commun au premier signal de données à transmettre de manière différentielle, et la partie de référence du troisième signal de données est appliquée sous forme de composante de mode commun au deuxième signal de données à transmettre de manière différentielle.

4. Procédé selon la revendication 3, **caractérisé en ce que** la partie de signal du troisième signal de données transmis en mode commun correspond en valeur absolue à la partie de référence du troisième signal de données transmis en mode commun, mais est de signe inversé.

5. Procédé selon l'une des revendications précédentes, **caractérisé en ce que** les deux paires de conducteurs (32, 34) sont blindées par un blindage commun.

6. Procédé selon la revendication 5, **caractérisé en ce que** les deux paires de conducteurs (32, 34) sont guidées dans une disposition en quadruple étoile, de préférence dans un système de transmission HSD.

7. Procédé selon l'une des revendications précédentes, **caractérisé en ce qu'**un signal USB3 est transmis, les données USB3 étant transmises de manière différentielle de l'hôte à l'appareil (SSTX+ et SSTX-) par la première paire de conducteurs (32) et les données USB3 transmises de manière différentielle de l'appareil à l'hôte (SSRX+ et SSRX-) par la deuxième paire de conducteurs (34), tandis que le signal D+/D- est transmis par un circuit fantôme.

8. Adaptateur (10), avec une première interface sous la forme d'une interface USB (12) à trois paires de conducteurs de signaux USB (SSTX+, SSTX- ; SSRX+, SSRX- ; D+, D-), chaque paire étant conçue pour la transmission différentielle d'un signal de données USB, et avec une deuxième interface (14) à deux paires de conducteurs de signaux transmetteurs (32, 34), chaque paire étant conçue pour la transmission différentielle d'un signal de données, **caractérisé par** des moyens pour ajouter une première composante de mode commun au signal de données USB à amener de manière différentielle par la première paire de conducteurs de signaux USB (SSTX+, SSTX-) pour produire un premier signal de transmission différentiel à transmettre par la première paire de conducteurs de signaux transmetteurs (32) et des moyens pour ajouter une deuxième composante de mode commun au signal de données USB à amener de manière différentielle par la deuxième paire de conducteurs de signaux USB (SSRX+, SSRX-) pour produire un deuxième signal de transmission différentiel à transmettre par la deuxième paire de conducteurs de signaux transmetteurs (34), la première composante de mode commun correspondant à une partie de signal (D+) du signal de données USB à amener de manière différentielle par la troisième paire de conducteurs de signaux USB (D+, D-), ou à un multiple ou une fraction de celui-ci, et la deuxième composante de mode commun correspondant à une partie de référence (D-) du signal à amener de manière différentielle par la troisième paire de conducteurs de signal USB (D+, D-), ou à un multiple ou une fraction de celui-ci.

9. Adaptateur selon la revendication 8, **caractérisé en ce que** la deuxième interface (14) est une interface HSD.

10. Adaptateur selon la revendication 8 ou 9, **caractérisé par** une prise USB3 et/ou un câble USB3 connectés à l'interface USB (12) et une prise HSD ou un câble HSD connecté(e) à la deuxième interface (14).

11. Système de transmission de signaux USB (100) comprenant deux adaptateurs (10, 20) selon la revendication 8 qui sont reliés entre eux par les deux paires (32, 34) de conducteurs de signaux transmetteurs.

12. Système de transmission de signaux USB selon la revendication 11, **caractérisé en ce que** la première paire de conducteurs de signaux USB est une paire de conducteurs de signaux SSTX (SSTX+, SSTX-), la deuxième paire de conducteurs de signaux USB est une paire de conducteurs de signaux SSRX (SSRX+, SSRX-) et la troisième paire de conducteurs de signaux USB est une paire de conducteurs de signaux D (D+, D-).

13. Système de transmission de signaux USB selon la revendication 11 ou 12, **caractérisé en ce que** les deux paires (32, 34) de conducteurs de signaux transmetteurs sont disposées dans un câble en forme de quadruple étoile et sont de préférence réalisées sous la forme d'une liaison HSD.

14. Système de transmission de signaux USB selon l'une des revendications 11 à 13, **caractérisé en ce qu'**entre les deux adaptateurs (10, 20) s'étend en outre une paire de conducteurs d'alimentation (36) qui est reliée à des paires de conducteurs d'alimentation (VBUS, GND) des interfaces USB (10, 20).

15. Système de transmission de signaux USB selon l'une des revendications 11 à 14, **caractérisé par** une prise de connexion USB3 et/ou un câble de connexion USB3 connectés à au moins l'une des interfaces USB (12, 22).

16. Système de transmission de signaux USB selon l'une des revendications 11 à 15, **caractérisé par** un blindage pour le blindage électromagnétique des signaux de données qui s'étend de la première interface USB (12) à la deuxième interface USB (22) en passant par les deux adaptateurs (10, 20) et les paires de conducteurs de signaux transmetteurs (32, 34).

17. Système de transmission de signaux USB selon l'une des revendications 11 à 16, **caractérisé par** une carte de circuit imprimé disposée dans chacun des adaptateurs (10, 20) et pourvue d'éléments de commutation logique tels que des additionneurs et/ou des soustracteurs numériques.
